# EUROPEAN PATENT APPLICATION

(11) **EP 4 506 080 A1**
(43) Date of publication of application: **12.02.2025**
(21) Application number: 24183031.4
(22) Date of filing: 19.06.2024
(51) Int. Cl.: B21D 22/08, B21D 22/21, B21D 22/16, B21D 51/26

(54) **APPARATUS FOR MANUFACTURING PRISMATIC CAN**

(30) Priority: 10.08.2023 KR 20230104640
(71) Applicant: Samsung SDI Co., Ltd., Yongin-si, Gyeonggi-do 17084 (KR)
(72) Inventor: SHIN, Man Soo, 17084 Yongin-si (KR)
(74) Representative: Marks & Clerk LLP

(57) **Abstract**

An apparatus for manufacturing a prismatic can includes a die tool (100) having a recessed shape to contain a bar-shaped slug (10), a punch (260) arranged on a horizontal axis of the die tool (100) to reciprocate in a left and right direction so as to press the slug (10) contained in the die tool (100), and a connecting rod (210, 220) between a driver configured to generate power and the punch to transmit the power generated by the driver to the punch (260). A cross-section of an edge of the punch (260) in a direction of the die tool (100) has a rectangular shape corresponding to a bottom surface of an impact can to be manufactured, and upper and lower areas of the punch (260) are provided in an asymmetrical shape based on a horizontal axis center line. In order to solve the problem of punch (260) lifting due to torque imbalance at the impact, a punch load center point may be disposed on the same horizontal extension line as the slide-side load application point based on an appropriate amount of eccentricity that ensures the torque balance.

## Description

### BACKGROUND

### 1. Field

Aspects of embodiments relate to an apparatus for manufacturing a prismatic can.

### 2. Description of the Related Art

Batteries may be classified into prismatic batteries, cylindrical batteries, pouch-type batteries, and the like depending on their shape. Such a prismatic or cylindrical battery may be manufactured by inserting an electrode assembly including a positive electrode, a negative electrode, and a separator into a metal can and then sealing the metal can, and such a pouch-type battery may be manufactured by wrapping an electrode assembly with aluminum foil coated with an insulating material.

A method for manufacturing the battery can according to the related art may include a deep drawing method, an impact method, etc. In the deep drawing method, a sheet-shaped metal plate is transferred to sequential steps with different die tools, and approximately ten punching processes may be sequentially performed to change the sheet metal into the can. In the impact method, a billet-shaped slug is transferred on a die tool, and a strong punching is performed one time on the slug using a punch tool to complete the can. This impact method may reduce the number of processes to save manufacturing costs of the can.

However, both the deep drawing method and the impact method according to the related art have limitations in reducing a thickness of the can due to characteristics of the manufacturing process, and there is a limitation of causing a large thickness variation depending on an area of the can.

The above-described information disclosed in the technology that serves as the background of the present disclosure is provided for improving understanding of the background of the present disclosure and, thus, may include information that does not constitute the related art.

### SUMMARY

According to an aspect of one or more embodiments of the present disclosure, an apparatus for manufacturing a prismatic can is provided, which is capable of manufacturing an impact prismatic can having a uniform (uniform or substantially uniform) sidewall thickness. According to aspects of one or more embodiments of the present disclosure, an apparatus for manufacturing a prismatic can is provided, in which rigidity of an impact tool is reinforced to minimize or reduce bending in an impact method using a high-speed mechanical press, and the impact punch improves the can quality and a reliability of the high-speed impact process by adopting a special shape so as not to interfere with rotational logistics in which slugs are inserted and impact cans are taken out.

According to some embodiments, an apparatus for manufacturing a prismatic can includes: a die tool configured to contain a bar-shaped slug; a punch arranged on a horizontal axis of the die tool to reciprocate in a left and right direction so as to press the slug contained in the die tool; and a connecting rod between a driver configured to generate power and the punch to transmit the power generated by the driver to the punch, wherein a cross-section of an edge of the punch in a direction of the die tool has a rectangular shape corresponding to a bottom surface of an impact can to be manufactured, and upper and lower areas of the punch are provided in an asymmetrical shape based on a horizontal axis center line.

The upper area of the punch may be constituted by a first pressing area in the direction of the die tool and a first reinforcement area in a direction of the connecting rod, and the lower area of the punch may be constituted by a second pressing area in the direction of the die tool and a second reinforcement area in the direction of the connecting rod.

Based on a longitudinal direction of the punch, a length of the first pressing area may be less than that of the second pressing area.

Based on a longitudinal direction of the punch, a length of the first pressing area may correspond to a height of a side surface extending from the bottom surface of the impact can.

A thickness of each of the first pressing area and the second pressing area may correspond to a width of a short side of a side surface extending from the bottom surface of the impact can.

Based on a longitudinal direction of the punch, a width of the punch may correspond to a width of a long side of a side surface extending from the bottom surface of the impact can.

Each of the first pressing area and the second pressing area may have a thickness less than that of each of the first reinforcement area and the second reinforcement area.

The first pressing area and the first reinforcement area may be connected to each other to be inclined in a tapered shape, and the second pressing area and the second reinforcement area may be connected to each other to be inclined in a tapered shape.

The apparatus may further include a stripper between the die tool and the punch to pass through the punch if the punch reciprocates.

A cross-section of a portion of the punch, which is inserted in the stripper, at a position of a bottom dead center may be greater than that of the lower area.

A cross-section of a portion of the punch, which is inserted in the stripper, at a position of a bottom dead center may have a T shape.

The stripper may have a hole to correspond to the shape of the cross-section through which the punch passes.

The hole of the stripper may be inclined such that a size of the hole on a side facing a punch holder configured to fix the punch is larger than that of the hole at an opposite side.

The apparatus may further include a transfer part between the die tool and the punch and configured such that the slug is on a horizontal axis of the die tool and the punch, and the impact can manufactured by the punch is withdrawn.

The transfer part may be provided with radial blades to rotate so as to transfer the slug and the impact can.

An area of a lower portion of the punch, which passes through the stripper, at a position of a bottom dead center may have a thickness corresponding to a gap between the blades so as not to interfere with the blades.

The apparatus may further include: a punch holder configured to fix the punch; a slide connected between the connecting rod and the punch holder to horizontally transmit power from the connecting rod; and a slide guide configured to support horizontal movement of the slide.

The punch holder may be mounted on the slide such that a slide-side load application point and a load center point of the punch are on a same horizontal extension line.

The punch holder may be mounted on the slide such that a slide-side load application point is vertically below a horizontal extension line of the connecting rod axis by an amount of eccentricity.

The amount of eccentricity may be calculated based on a distance between the horizontal extension line of the connecting rod axis and a horizontal extension line of a load center point of the punch, based on the slide-side load application point.

The amount of eccentricity may be in a range of about 5 mm to about 25 mm.

At least some of the above and other features of the invention are set out in the claims.

### BRIEF DESCRIPTION OF DRAWINGS

The accompanying drawings are included to provide a further understanding of the present disclosure, and are incorporated in and constitute a part of this specification. The drawings illustrate some example embodiments of the present disclosure and, together with the description, serve to explain principles of the present disclosure. In the drawings:
FIGS. 1A, 1B, and 1C illustrate a perspective view, a cross-sectional view showing a long side thickness, and a cross-sectional view showing a short side thickness of an impact can, respectively, according to one or more embodiments;
FIG. 2 illustrates a left side view, and FIGS. 3A and 3B illustrate perspective views, of an apparatus for manufacturing a prismatic can according to one or more embodiments;
FIGS. 4A and 4B illustrate perspective views of a punch and a punch bending state according to the related art, and FIG. 4C illustrates perspective views of a punch and a punch bending state according to one or more embodiments;
FIGS. 5A and 5B illustrate a perspective view of a coupling relationship between the punch and a stripper and a cross-sectional view of the punch at a coupling position, respectively, according to one or more embodiments;
FIGS. 6A and 6B illustrate left side views of a horizontal press structure according to the related art and a horizontal press structure according to one or more embodiments, respectively; and
FIG. 7 illustrates a relationship between an amount of eccentricity and an amount of punch lifting for each pressing load of the apparatus for manufacturing the prismatic can according to one or more embodiments.

### DETAILED DESCRIPTION

While some example embodiments of the present disclosure are described herein to more completely explain the present disclosure to those skilled in the art, the following examples may be modified in various other forms. Embodiments of the present disclosure may, however, be embodied in many different forms and are not to be construed as being limited to the embodiments set forth herein; rather, these embodiments are provided so that those skilled in the art may thoroughly understand the present invention. Rather, these embodiments are provided so that this disclosure will be thorough and complete, and will fully convey the embodiments of the present disclosure to those skilled in the art.

In some embodiments, in the following drawings, the thickness or size of components or layers may exaggerated for convenience and clarity of description, and the same reference numerals in the drawings refer to the same elements. As used herein, the term "and/or" includes any and all combinations of one or more of the associated listed items. In this specification, it is also to be understood that if a member A is referred to as being connected to a member B, the member A may be directly connected to the member B or indirectly connected to the member B with one or more members C therebetween.

The terms used in this specification are for illustrative purposes of the present disclosure and should not be construed to limit the meaning or the scope of the present disclosure. As used in this specification, a singular form may, unless definitely indicating a particular case in terms of the context, include a plural form. Also, the expressions "comprise/include" and/or "comprising/including" used in this specification neither define the mentioned shapes, numbers, steps, operations, members, elements, and/or groups of these, nor exclude the presence or addition of one or more other different shapes, numbers, steps, operations, members, elements, and/or groups of these, or addition of these. The term "and/or" used herein includes any and all combinations of one or more of the associated listed items.

As used herein, terms such as "first," "second," etc. are used to describe various members, components, areas, layers, and/or portions. However, it is to be understood that the members, components, areas, layers, and/or portions should not be defined by these terms. The terms do not mean a particular order, up and down, or superiority, and are used for distinguishing one member, component, region, layer, or portion from another member, component, region, layer, or portion. Thus, a first member, component, region, layer, or portion which will be described may also refer to a second member, component, region, layer, or portion, without departing from the teaching of the present disclosure.

Spatially relative terms, such as "below," "beneath," "lower," "above," "upper," and the like, may be used herein for ease of description to describe one element or feature's relationship to another element(s) or feature(s), referring to the figures. These spatially relative terms are intended for ease of comprehension of the present invention according to various process states or usage states of the present invention, and, thus, the present disclosure is not limited thereto. For example, if an element or feature shown in the drawings is turned, the element or feature described as "beneath" or "below" may change into "above" or "upper." Thus, the term "lower" may encompass the term "upper" or "below."

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

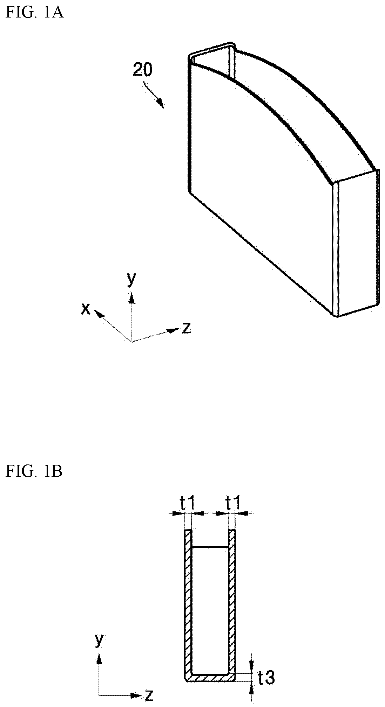

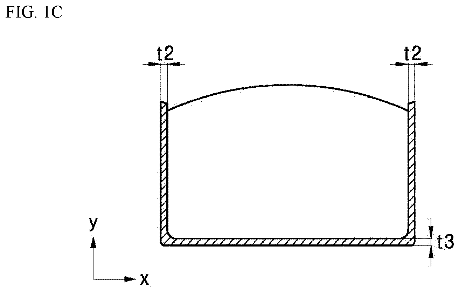

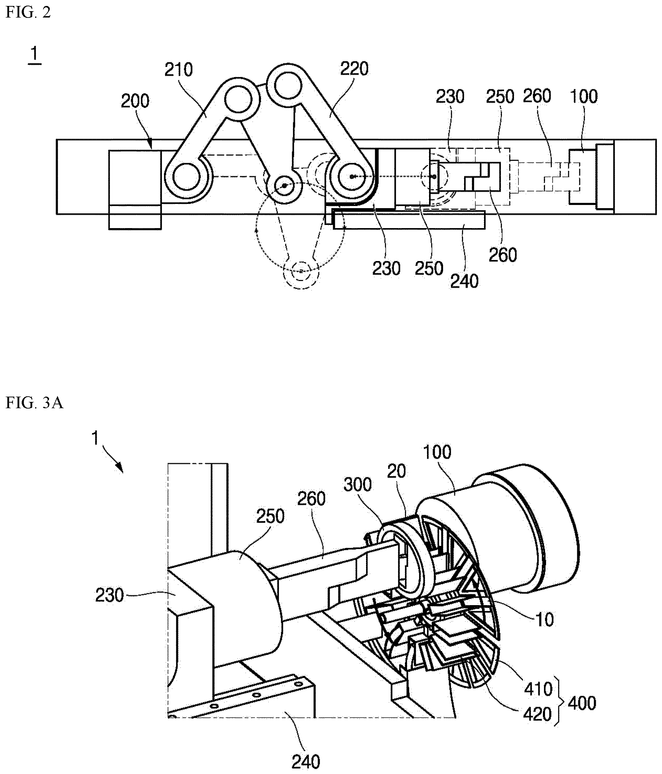

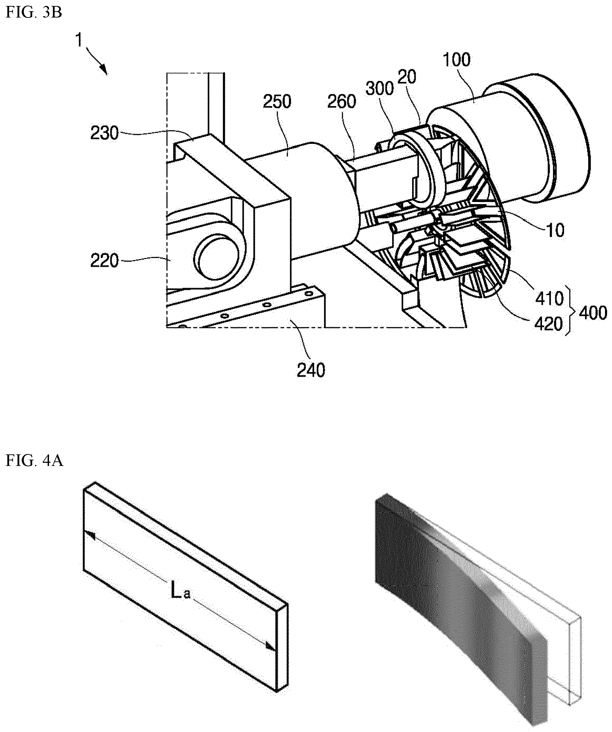

FIGS. 1A, 1B, and 1C illustrate a perspective view, a cross-sectional view showing a long side thickness, and a cross-sectional view showing a short side thickness of an impact can, respectively, according to one or more embodiments; and FIG. 2 illustrates a left side view, and FIGS. 3A and 3B illustrate perspective views, of an apparatus for manufacturing a prismatic can according to one or more embodiments.

In general, a method for manufacturing a prismatic battery can applied to electric vehicles, etc. may include a deep drawing method and an impact method. In the impact method, a billet-shaped slug may be disposed on a die tool, and a strong punching may be performed one time on the slug using a punch to complete the can.

Embodiments relate to the impact method. To manufacture a prismatic can using the impact method, impact, ironing, cutting, cleaning, and inspection processes may be performed from a slug-shaped raw material. In some embodiments, the impact process may be classified into a main pre-processing process, an ironing process (and opening correction) as a pre-processing process, and cutting/cleaning/inspection processes such as remaining post-processes. In some embodiments, in the impact process, a product manufactured by impacting a slug and extruding the slug in a forward direction may be called an impact preform, and a final can may be completed through the post-processing process and the post-processes from the impact preform. Herein, for convenience of explanation, the impact preform will be collectively referred to as an impact can.

In the impact process, one strong punching may be applied to the slug to extrude the impact can, and, thus, there may be higher possibility of a non-uniform pattern in sidewall thickness compared to the deep drawing method. In some embodiments in which non-uniformity occurs in a thickness of the sidewall of the can, a long side may have a random difference in thickness between a front surface and a rear surface, and the thickness of the sidewall of the can may become thinner or thicker from an upper portion (inlet) to a lower portion (bottom) of the can. Similar to the long side, one of the short sides may become thinner from the upper portion to the lower portion of the can, and the other of the short sides may have an opposite thickness pattern. In some embodiments of the short side, unlike the long side, a biased direction of the thickness tends to be constant, not random.

Even after performing the post-processing process (e.g., ironing), the thickness non-uniformity determined in the impact process may not be corrected, and an outer appearance of the can may be defective (e.g., ① crack/rupture at a center of the long side, ② crack/rupture at a corner of a upper portion of the can, ③ elongation/rupture at a corner of a lower portion of the long side, ④ concavity/convexity of the long side, and ⑤ wavy dents/wrinkles of the short side). In some embodiments, the sidewall structure and thickness characteristics of the final prismatic can may be determined in the impact process.

In some embodiments, an impact process of an impact can 20 from a slug 10 and extruding the impact can 20 in a forward direction through an apparatus 1 for manufacturing the prismatic can will be described. In some embodiments, referring to FIG. 1, the impact can 20 having an opening defined in a side thereof, a rectangular bottom part, and a sidewall extending in a height direction (y-axis direction in FIG. 1A) from the bottom part may be manufactured. In some embodiments, referring to FIGS. 1B and 1C, in the sidewall, an x-axis direction may be referred to as a long side, and a z-axis direction may be referred to as a short side. Based on the long side, the long side may be constituted by a front surface and a rear surface, and the short side may be constituted by a left surface and a right surface. In some embodiments, a thickness of the long side (sidewall thickness) may be expressed as t1, a thickness of the short side may be expressed as t2, and a thickness of the bottom surface may be expressed as t3. The slug 10 may be used as a material of the can to be extruded and, for example, may include aluminum, an aluminum alloy, or equivalents thereof.

Referring to FIG. 2, the apparatus 1 for manufacturing the prismatic can according to some embodiments of the present disclosure may include a die tool 100, in which the bar-shaped slug 10 is transferred and contained, and a punch 260 that presses the slug 10 contained in the die tool 100. In some embodiments, the punch 260 may be disposed on a horizontal axis of the die tool 100 to reciprocate in a left and right direction with respect to the fixed support 200. In some embodiments, the apparatus 1 for manufacturing the prismatic can may include a connecting rods 210 and 220, which transmit special motions from a main driver to the slide 230 and the punch 260 through a crankshaft. The crankshaft and the main driver were not expressed in detail for convenience.

The connecting rods 210 and 220 may change rotational movement of the crankshaft connected to the main driver into linear movement of the punch 260.

In some embodiments, the apparatus 1 for manufacturing the prismatic can may include a punch holder 250 that fixes the punch 260, a slide 230 that is connected between the connecting rod 220 and the punch holder 250 to transmit power from the connecting rod 220 in the horizontal direction, and a slide guide 240 that supports the horizontal movement of the slide 230.

In some embodiments, the apparatus 1 for manufacturing the prismatic can may drive the crankshaft to rotate by the main driver and may horizontally reciprocate the slide 230 by the rotation of the connecting rods 210 and 220. In some embodiments, force due to the reciprocating movement may be transmitted to the punch 260 mounted on the punch holder 250 connected to the slide 230. In some embodiments, the main driver may include a motor, a driver for driving the motor, a controller, and the like. However, the controller is not limited thereto and may be provided separately.

A solid line in FIG. 2 may illustrate motion near a top dead center at which the punch 260 moves to a left side, and a rotation angle of the crankshaft is about 180°, and a dotted line may illustrate motion of a bottom dead center at which the punch 260 moves to a right side (toward the die tool), and a rotation angle of the crankshaft is about 360°. In some embodiments, the solid line may be referred to as an ascending state of the slide 230, and the dotted line may be referred to as a descending state of the slide 230. In some embodiments, the rotational force may be converted into linear force through crank motion of the crankshaft, and a cycle in which the rotation angle is changed in a range of about 0° to 180° (move backward) and about 180° to 360° (move forward) in a stroke may be continuously repeated.

In some embodiments, the apparatus 1 for manufacturing the prismatic can may be a high-speed mechanical horizontal press. The main driver of the apparatus 1 for manufacturing the prismatic can may operate at a high speed of, for example, about 60 strokes per minute (spm) or more.

FIG. 3A illustrates a perspective view when the punch 260 is moved backward to the top dead center, and FIG. 3B illustrates a perspective view when the punch 260 is moved forward to the bottom dead center. In some embodiments, referring to FIG. 3A, when the punch 260 is disposed near the top dead center, a transfer part 400 may rotate to dispose the slug 10 at a pressing position of the punch 260. In some embodiments, referring to FIG. 3B, when the punch 260 is disposed at the position of the bottom dead center, and the punch 260 presses the slug 10, referring to FIG. 3A, the extruded impact can 20 may rotate to be transferred.

In some embodiments, referring to FIGS. 3A and 3B, in the apparatus 1 for manufacturing the prismatic can, the punch 260 may pass through a stripper 300 when the punch 260 reciprocates, and the punch 260 and the stripper 300 may be configured so as not to interfere with the transfer part 400. The stripper 300 may be disposed between the punch 260 and the transfer part 400 such that interference with the transfer part 400 is avoided when the punch 260 reciprocates.

The stripper 300 may be disposed between the die tool 100 and the punch 260 to pass through the punch 260 when the punch 260 reciprocates. In some embodiments, the stripper 300 may have a hole defined to correspond to a shape of a cross-section through which the punch 260 passes. A further detailed description of the stripper 300 will be provided later.

In some embodiments, the transfer part 400 may be disposed between the die tool 100 and the punch 260, and the slug 10 may be disposed on a horizontal axis of the die tool 100 and the punch 260 to withdraw the impact can 20 manufactured by the punch 260. In some embodiments, the transfer part 400 may include a slug transfer part 410 having radial blades to rotate such that the slug 10 is input/transferred, and a can transfer part 420 that transfers the impact can 20. In some embodiments, the slug transfer part 410 and the can transfer part 420 may have radial blades disposed at corresponding positions. In some embodiments, when the slug 10 input/transferred by the slug transfer part 410 is extruded by the punch 260, the slug 10 may be disposed on the corresponding can transfer part 420 to rotate and then be transferred to a portion at which the impact can 20 is discharged.

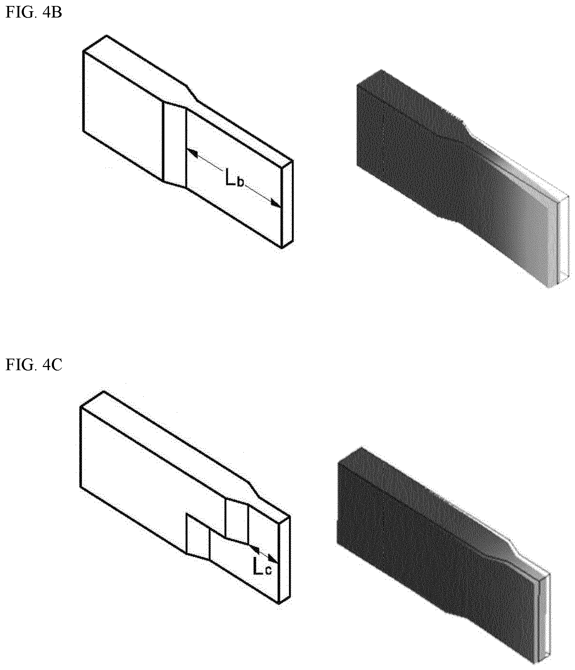

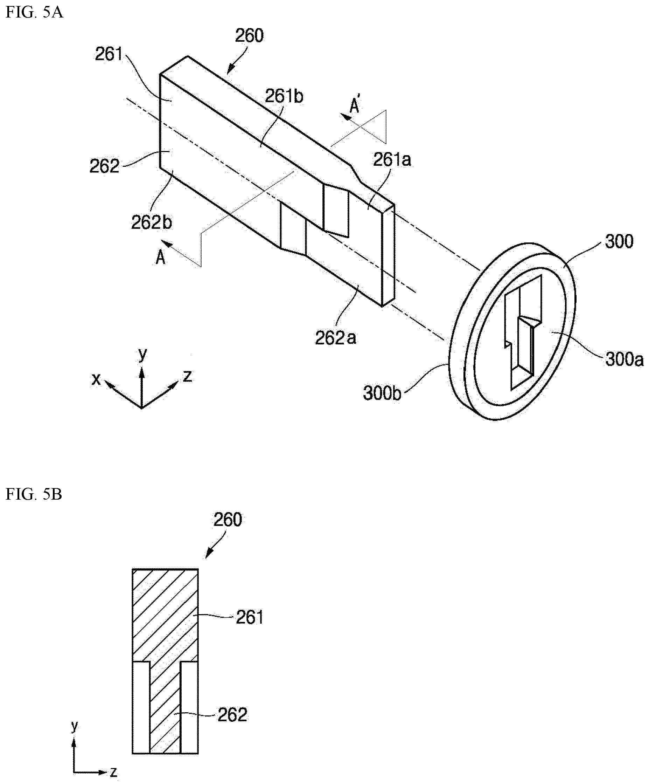

FIGS. 4A and 4B illustrate perspective views of a punch and a punch bending state according to the related art, and FIG. 4C illustrates perspective views of a punch and a punch bending state according to one or more embodiments. FIGS. 5A and 5B illustrate a perspective view of a coupling relationship between the punch and the stripper, and a cross-sectional view of the punch at a coupling position, respectively, according to various embodiments.

In the impact method, the thickness t1 of the long side and the thickness t2 of the short side may be completed through an interaction between a punch-die tool clearance, which is a gap between the punch 260 and the die tool 100, and the lubricated slug 10. If a limitation in thickness occurs, for example, the thickness t1 of the long side may be randomly biased toward the front/rear surfaces due to bending of the punch 260. In some embodiments, the thickness t2 of the sidewall may become thinner as it goes downward to the bottom due to a direction in which the punch is bent, and a height of the sidewall may be further developed compared to an opposite side. In some embodiments, if the biasing is extreme, cracks or rupture may occur at the side, at which the height of the sidewall is excessively developed, to interfere with the transfer part 400 and cause an emergency stop of the apparatus 1 for manufacturing the prismatic can. If the apparatus 1 for manufacturing the prismatic can is stopped, damage of components may occur, and resulting in loss of production time due to spare replacement and tool preheating.

In an impact can in which each of the long and short sides has a non-uniform thickness according to the related art, various appearance defects (dents, waves, convexities/concavities, cracks, fractures, etc.) may occur in a post-processing (e.g., ironing) process. The ironing may be a process of increasing the height and reducing the thickness by sweeping and pushing up the outer wall of the aluminum can. If the ironing occurs concurrently (e.g., simultaneously) on the long side, the short side, and the corners at which the long side and the short side meet each other, uniform height variation may be essential over an entire circumference of each surface of the can and connection corner therebetween, and if a balance is poor due to a change in height, the above-mentioned appearance defects may occur depending on the location and degree of unbalance. For example, if the long side, which is much thicker than the gap in the tool, and the short side, which is thinner than the gap, meet each other, then thethick long side of Impact preform has a large height change and the thin short side has no height change, so that strong shear stress may be developed around the corner to cause tearing (e.g., rupture). The defects in appearance and rupture are sorted out as defective in the inspection process and damage to the process yield rate can be automatically reflected. In some embodiments, there is possibility that a weak thickness portion, which is not visible from the outside, may occur in the ironing process. If the defects occur frequently under specific manufacturing conditions (die tool setting, shift, date, time, etc.) and lead to leakage defects, safety-related issues may occur when the assembled battery is applied.

Referring to FIG. 4A, in the existing method, because the impact punch according to the related art extrudes the sidewalls in a direction perpendicular to the plane view of the prismatic can, the impact punch may be based on a slender structure in which a cross-section of the bottom of the can simply extends (Lₐ) in a height direction. In some embodiments, a component of force may be generated in a lateral (front/rear direction of the long side) of a vertical load during the impact according to the shape, position, and lubricated state of the slug to cause bending of the punch. As an example, the lateral force of only 0.05% of the vertical load may cause bending beyond the punch-die tool clearance (see right view in FIG. 4A). A thickness of the surface facing the bending may become thinner than the opposite side and may become even thinner as it goes downward toward the bottom. The thinner long side may have higher height than opposite long side, and, if this height is excessive, the cracks or tearing may occur starting from a center of an upper portion thereof.

The bending of the punch, which is the cause of the non-uniform thickness of the long side, may be improved by reinforcing rigidity of the punch. In the related art, referring to FIG. 4B, the thickness of the punch is increased from the bottom dead center to a certain area (Lₐ-L_{b}) to avoid the interference, thereby reinforcing the rigidity. This simple reinforcement may significantly improve the rigidity compared to the basic punch (see FIG. 4A), but dimensional and forming defects may still occur at any time, and, thus, the rupture of the long side may occur occasionally, and the press stop may occur. This may imply a possibility that normal operation of the process is impossible due to repeated machine shutdowns and loss of time for tool resets.

In some embodiments of the present disclosure, referring to FIG. 4C, a structure that reinforces the rigidity of the punch 260 and avoids the interference may be provided. In some embodiments, referring to FIG. 5A, the stripper 300 may be disposed between the punch 260 and the transfer part 400 to avoid the interference with the transfer part 400 by the punch 260. A hole defined in the stripper 300 may be defined to correspond to the structure of the punch 260.

The punch 260 according to some embodiments may enlarge the reinforcement area compared to the reinforcement structure (see FIG. 4B) according to the related art and may have a structure in which the reinforcement area is further enlarged on the remaining area of the upper portion of the punch 260 except for L_{c} based on a horizontal virtual line. In some embodiments, a cross-section of the right side at the portion extending from the thin area of the lower portion of the punch to the reinforcement area may have a T shape (a T shape or a shape that is similar to a T shape) (see FIG. 5B). In some embodiments, the shape may be applied to the stripper 300 so as not to interfere with the transfer part 400 for inputting the slug and dispensing the can.

It is seen that the above structure may be applied to improve the bending rigidity compared to the related art, referring to the right view in FIG. 4C. In some embodiments, the bending rigidity may be improved by about 8.3 times compared to the basic type according to the related art (see FIG. 4A) and may be improved twice compared to the reinforced type (see FIG. 4B). In some embodiments, an improvement in process capability of Cₚ 1.33 (4σ) or more may be expected. In some embodiments, if the punch structure according to some embodiments is applied, the possibility of the dimensional defects exceeding a dimensional tolerance may be improved from a level of Sigma 3.0 (i.e., defect rate of about 2,700 parts per million (ppm)) to a level of Sigma 4.0 (i.e., defect rate of about 63 ppm). In some embodiments, the forming defects and the press emergency stop events caused by the excessive biasing may be almost eliminated.

More specific structures of the punch 260 and stripper 300 according to some embodiments will be described later.

Referring to FIG. 5A, the punch 260 may be divided into an upper area 261 and a lower area 262 based on a horizontal virtual center line (x-axis in FIG. 5A), and the upper area 261 and the lower area 262 may be defined in an asymmetric shape. A cross-section of an edge of the punch 260 in the direction of the die tool 100 may be provided in a rectangular shape corresponding to the bottom surface of the impact can 20 to be manufactured.

In some embodiments, the upper area 261 of the punch 260 may be constituted by a first pressing area 261a in the direction of the die tool 100 and a first reinforcement area 261b in the direction of the connecting rod 220. In some embodiments, the lower area 262 of the punch 260 may be constituted by a second pressing area 262a in the direction of the die tool 100 and a second reinforcement area 262b in the direction of the connecting rod 220.

In some embodiments, the first pressing area 261a may be thinner than the first reinforcement area 261b. In some embodiments, the second pressing area 262a may be thinner than the second reinforcement area 262b.

In some embodiments, a length of the first pressing area 261a may be shorter than that of the second pressing area 262a, based on a longitudinal direction (x-axis direction) of the punch 260. In some embodiments, the length of the first pressing area 261a may correspond to a height of the side surface extending from the bottom surface of the impact can 20 (length in the y-axis direction in FIG. 1), based on the longitudinal direction of the punch 260. In some embodiments, the impact can 20 may be provided to have a height corresponding to the length of the first pressing area 261a.

In some embodiments, a thickness (length in the z-axis direction in FIG. 5A) of each of the first pressing area 261a and the second pressing area 262a may correspond to a width (length in the z-axis direction in FIG. 1) of the short side of the side surfaces extending from the bottom surface of the impact can 20. In some embodiments, a width (length in the y-axis direction in FIG. 5A) of the punch 260 may correspond to a width (length in the x-axis direction in FIG. 1) of the long side of the side surfaces extending from the bottom surface of the impact can 20.

In some embodiments, referring to FIG. 5A, in a cross-section (surface taken along the line A-A' based on the y-axis in FIG. 5A) of a portion of the punch 260, which is inserted into the stripper 300, at the position of the bottom dead center of the punch 260, the upper area 261 may have a thickness greater than that of the lower area 262. In some embodiments, referring to FIG. 5B, the cross-section of the portion of the punch 260, which is inserted into the stripper 300, at the bottom dead center may be provided in a T shape.

In some embodiments, each of the first pressing area 261a and the first reinforcement area 261b may be connected to be inclined in a tapered shape. In some embodiments, each of the second pressing area 262a and the second reinforcement area 262b may also be connected to be inclined in a tapered shape. In some embodiments, the limitations of preventing or substantially preventing damage and distributing stress concentration may be solved, and natural matching with the stripper 300 may be achieved.

In some embodiments, the stripper 300 may have a hole defined to correspond to a shape of the cross-section through which the punch 260 passes. In some embodiments, the hole of the stripper 300 may also be provided in a T shape. In some embodiments, because the first and second pressing areas 261a and 262a of the punch 260 and the first and second reinforcement areas 261b and 262b are connected to be inclined, the hole of the stripper 300 may also be defined to be inclined. In some embodiments, the hole of the stripper 300 may be defined to be inclined such that a size of a punch side surface (rear surface 300b in FIG. 5A) is larger than that of a die tool side surface (front surface 300a in FIG. 5A). In some embodiments, the hole in the punch side surface 300b of the stripper 300 may have a taper-like structure resulting from the reinforcement structure of the first and second reinforcement areas 261b and 262b of the punch 260. Here, the punch side surface 300b of the stripper 300 may be the side that the punch 260 approaches as it moves forward toward the die tool 100, i.e., the side 300a opposite the punch side surface 300b may be the die tool side surface 300a of the stripper 300. In some embodiments, the size of the hole and taper of the punch side surface 300b of the stripper 300 can have sufficient offset dimensions such that there is no interference between the taper of the punch 260 and the taper of the stripper 300 even when the punch 260 reaches its bottom dead center. As a result, the taper of the stripper 300 may be such that the size of the hole decreases as it progresses from the punch side surface 300b to the die tool side surface 300a of the stripper 300. In some embodiments, the size of the hole in the die tool side surface 300a should maintain a minimum clearance with the punch 260 just enough so that when the extruded impact preform (can) is stuck in the punch 260 and exits the die tool 100, the opening (open top) of the preform interferes with the die tool side surface 300a and can be peeled off the punch 260. In some embodiments, the impact can 20, peeled as described above, may be placed in the can transfer part 420 and rotated to be taken out at the bottom.

In some embodiments, the area passing through the stripper 300 on the lower area 262 of the punch 260 at the position of the bottom dead center of the punch 260 may be provided so as not to interfere with the blades of the transfer part 400. In some embodiments, a thickness (length in the z-axis direction in FIG. 5A) of the area passing through the stripper 300 on the lower area 262 of the punch 260 at the position of the bottom dead center of the punch 260 may correspond to a gap between the blades. In some embodiments, the reinforcement areas of the upper area 261 and the lower area 262 may not be provided to be the same, but the reinforcement area of the lower area 262 may be provided in a smaller asymmetrical shape such that the punch 260 does not interfere with the transfer part 400 during reciprocation of the punch 260.

In some embodiments, as described above, each of the punch 260 and the hole of stripper 300 may be defined in the T shape to minimize or reduce bending of the punch 260 such that the thickness t1 of the long side of the impact can 20 is uniform. For example, according to the related art, a median value was around ±11%, and a Cₚ value was around 1.0, and, thus, there was high possibility of defects due to falling short of a required tolerance. In some embodiments, a thickness of a surface to which the punch is bent to approach may be thinner than that of the other side and may become thinner from the upper portion to the lower portion (bottom side) of the can. In some embodiments, the non-uniform thickness of the long side may cause frequent dimensional defects with an error of about ±0.02 in the clearance setting of the die tool, and the emergency stop of press machine may frequently occur due to poor impact forming by the excessive bending of the punch. However, in some embodiments, the median value of about ± 5% or less and the Cₚ value of about 1.33 or more may secured to reduce tool setting sensitivity, stabilize the dimensions, and prevent or substantially prevent the emergency stop of press due to the impact forming defects.

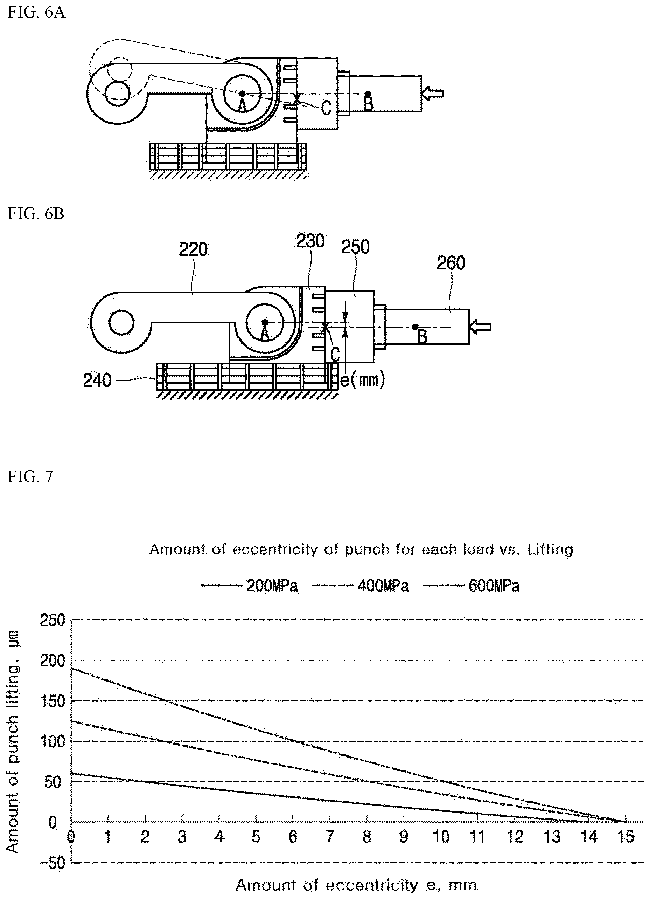

FIGS. 6A and 6B illustrate left side views of a horizontal press structure according to the related art and a horizontal press structure according to one or more embodiments, respectively; and FIG. 7 illustrates a relationship between an amount of eccentricity and an amount of punch lifting for each pressing load of the apparatus for manufacturing the prismatic can according to one or more embodiments.

The apparatus 1 for manufacturing the prismatic can according to some embodiments may be a high-speed mechanical horizontal press having cost-competitiveness by maximizing a production rate (e.g., about 200 tonf to about 400 tonf, and about 90 ± 30 spm or more), and in some embodiments, the apparatus 1 for manufacturing the prismatic can may use ⓐ a mechanical press method, include a slide having ⓑ a minimum or reduced size/weight (minimizing or reducing inertia), and include ⓒ a horizontal structure (efficiency of input/dispensing logistics).

The apparatus 1 for manufacturing the prismatic can according to some embodiments may restrict only two corners of the four corners of a contact surface between the slide 230 and the slide guide 240. In some embodiments, because the two corners are in a free state, displacement may be allowed in y-direction at the two corners in the free state when there is torque unbalance based on a load application point. The related components based on the load application point may include a connecting rod 220, a slide guide 240, a slide 230, a punch holder 250, and a punch 260. In some embodiments, force of the press may be transmitted to the slide 230 through the connecting rod 220 and may be balanced with reaction force through the punch 260. Referring to FIG. 6A, the horizontal press according to the related art may be provided to design a connection portion between the slide and the punch holder so that a horizontal extension line of a connecting rod axis A and an extension line of a load center point B of the punch coincide with each other.

The mechanical press may convert rotational force into linear force through crank motion and may continuously repeat a cycle, in which a rotation angle is changed from about 0° to about 360°, in a single stroke. In some embodiments, a section in which actual pressing force occurs may be the last section of the bottom dead center at an angle of about 350° to about 360°. The connecting rod may transmit the press force at an angle of about 350° to about 360° in an inclined state (not parallel to the punch), and, thus, a load application point C, which is a point of application of the pressing force on the slide, may not be disposed on the horizontal extension line of the connecting rod axis A and the load center point B of the punch, but be disposed several millimeters to tens of millimeters below these extension lines (see FIG. 6A).

As a result, in the method according to the related art, which is illustrated in FIG. 6A, the slide at the time of impact may appear as a phenomenon in which a punch holder mounting surface rotates due to torque imbalance, and, thus, a front side of the punch in which the extrusion occurs is lifted. For example, when impacting an electric vehicle (load of about 250 tons), thickness non-uniformity of about Δ0.12 mm may occur in the vertical thickness t2 of the short side.

In some embodiments, referring to FIG. 6B, the load center point B of the punch 260 may be disposed on the same horizontal extension line as the load application point C of the slide 230. In some embodiments, the load application point C may move vertically downward by an eccentric distance e (mm) from the horizontal extension line of the connecting rod axis A, and, thus, the load application point C and the load center point B may be designed to be disposed on the same horizontal extension line. In some embodiments, the punch lifting may be eliminated. In some embodiments, referring to FIG. 7, it is seen that a load converges to a specific eccentricity value (~ about 15 mm) regardless of a load magnitude. In some embodiments, an appropriate amount of eccentricity that ensures the torque balance may depend mainly on the design of the slide 230 and the punch holder 250 and may be approximately independent of the load magnitude.

In some embodiments, the punch holder 250 may be mounted on the slide 230 such that the load application point C of the slide 230 and the load center point B of the punch 260 are disposed on the same horizontal extension line. In some embodiments, the punch holder 250 may be mounted on the slide 230 such that the load application point C of the slide 230 is disposed vertically below the horizontal extension line of the connecting rod axis A by the amount of eccentricity. In some embodiments, the amount of eccentricity may be calculated based on a distance between the horizontal extension line of the connecting rod axis A and the horizontal extension line of the load center point B of the punch 260, based on the load application point C of the slide 230. For example, the amount of eccentricity may be about 5 mm to about 25 mm.

As described above, the load center point B of the punch 260 may be disposed on the same horizontal extension line as the load application point C of the slide 230, and, thus, the thickness t2 of the short side of the impact can 20 may be uniform. However, if the punch lifting phenomenon occurs as in the related art, there may be a high possibility of defects falling short of the required tolerance, for example, the median value is around about ±9%, the Cₚ value has a level of about 1.0. A thickness of a surface that approaches when the punch is lifted may gradually become thinner from the upper portion to the lower portion (bottom) of the can. In some embodiments, in the non-uniform thickness of the short side, if the tool setting is defective in combination with the non-uniform thickness of the long side, defects of the outer appearance may occur frequently during the post-ironing process, and, in a worst case, leakage defects (through the inspection process) may occur in a state of hiding an excessive stretching thin portion somewhere on the top/bottom/corner inside the can.

However, in some embodiments, as described above, the load center point B of the punch 260 may be disposed on the same horizontal extension line as the load application point C of the slide 230, and, thus, for example, the median value of about ±4% or more, and the Cₚ value of about 1.33 or more may be secured. In some embodiments, tool setting sensitivity may be reduced, the dimensions may be stabilized, the probability of appearance defects of the ironing may be reduced to about 4σ level, and the ironing may occur stably around a circumference of the can to prevent or substantially prevent local shear or stretching from occurring.

Because the non-uniformity of the bottom thickness t3 is dependent on the characteristics of the thickness t2 of the short side, if the uniformity of the short side may be improved, the bottom uniformity (especially in the left/right symmetry) may be significantly improved. Because the thickness non-uniformity of the short side has characteristics in which the biased direction is constant, unlike the long side, the shape of the bottom of the punch may be adjusted to solve the non-uniformity of the bottom thickness t3. In some embodiments, the shape of the bottom surface of the punch 260 in the direction of the die tool 100 according to some embodiments may be changed in response to the bottom thickness t3 of the impact can 20. For example, as the punch 260 is deformed upon the impact, a central thickness of the bottom may tend to be thicker than each of the left and right surfaces, and, thus, a curvature that compensates for this phenomenon may be applied to the shape of the bottom of the punch 260.

As described above, the apparatus 1 for manufacturing the prismatic can, to which the impact can method according to some embodiments is applied, may have a higher material utilization rate compared to the deep drawing method, and, also, the forming process may be reduced to three processes (① impact - ② ironing -③ correction of opening area) compared to ten to fifteen processes of the deep drawing, such that the production speed per line has the potential to improve by more than four times. The cost competitiveness of the components may be proportional to Productivity × Good Product Rate. In some embodiments, it may be determined by a relationship Productivity = Production Speed × Operation Rate, and the Good Product Rate may include appearance quality as well as the thickness. In some embodiments, as described above, the apparatus 1 for manufacturing the prismatic can according to embodiments may improve the cost competitiveness of the components by improving the limitations related to the productivity and yield.

According to embodiments of the present disclosure, the rigidity of the impact punch may be reinforced to minimize or reduce bending in the impact method using the high-speed mechanical horizontal press, and the impact punch may be adopted so as not to interfere with the rotating logistics for inputting the slug and dispensing the can, and, thus, the thicknesses of the long side of the impact can and the sidewall of the short side may be uniform, and thickness patterns of the long/short sides may be removed or avoided to solve the issues of the productivity and the yield, which are seen in the mass production of the impact prismatic can for electric vehicle batteries according to the related art, thereby improving the product quality and the product reliability.

According to embodiments of the present disclosure, the impact method using the high-speed mechanical horizontal press may be applied to improve the impact speed and the overall line operation rate, thereby improving the production speed compared to the deep drawing prismatic can, and, also, the thickness quality and the yield, which have the equal or higher level, may be secured, and manufacturing costs and an installation area may be reduced.

According to embodiments of the present disclosure, the punch load center point may be disposed on the same horizontal extension line as the slide-side load application point based on the appropriate amount of eccentricity that ensures the torque balance to solve the limitation of the punch lifting phenomenon due to the torque imbalance at the impact, thereby improving the product quality such as the thickness of the short side of the prismatic can.

While some embodiments for carrying out the present disclosure have been described herein, the present disclosure is not limited to these embodiments, and it will be understood by a person skilled in the art that various changes in form and details may be made therein without departing from the scope of the present disclosure as set forth by the following claims.

## Claims

1. An apparatus for manufacturing a prismatic can, the apparatus comprising:
a die tool configured to contain a bar-shaped slug;
a punch arranged on a horizontal axis of the die tool to reciprocate in a left and right direction so as to press the slug contained in the die tool; and
a connecting rod between a driver configured to generate power and the punch to transmit the power generated by the driver to the punch,
wherein a cross-section of an edge of the punch in a direction of the die tool has a rectangular shape corresponding to a bottom surface of an impact can to be manufactured, and
upper and lower areas of the punch are provided in an asymmetrical shape based on a horizontal axis center line.

2. The apparatus as claimed in claim 1, wherein the upper area of the punch is constituted by a first pressing area in the direction of the die tool and a first reinforcement area in a direction of the connecting rod, and
the lower area of the punch is constituted by a second pressing area in the direction of the die tool and a second reinforcement area in the direction of the connecting rod.

3. The apparatus as claimed in claim 2, wherein, based on a longitudinal direction of the punch, a length of the first pressing area is less than that of the second pressing area.

4. The apparatus as claimed in claim 2 or 3, wherein, based on a longitudinal direction of the punch, a length of the first pressing area corresponds to a height of a side surface extending from the bottom surface of the impact can.

5. The apparatus as claimed in claim 2, 3 or 4, wherein a thickness of each of the first pressing area and the second pressing area corresponds to a width of a short side of a side surface extending from the bottom surface of the impact can.

6. The apparatus as claimed in any one of claims 2 to 5, wherein, based on a longitudinal direction of the punch, a width of the punch corresponds to a width of a long side of a side surface extending from the bottom surface of the impact can.

7. The apparatus as claimed in any one of claims 2 to 6, wherein each of the first pressing area and the second pressing area has a thickness less than that of each of the first reinforcement area and the second reinforcement area.

8. The apparatus as claimed in any one of claims 2 to 7, wherein the first pressing area and the first reinforcement area are connected to each other to be inclined in a tapered shape, and the second pressing area and the second reinforcement area are connected to each other to be inclined in a tapered shape.

9. The apparatus as claimed in any preceding claim, further comprising a stripper between the die tool and the punch to pass through the punch if the punch reciprocates.

10. The apparatus as claimed in claim 9, wherein a cross-section of a portion of the punch, which is inserted in the stripper, at a position of a bottom dead center is greater than that of the lower area.

11. The apparatus as claimed in claim 9 or 10, wherein the stripper has a hole to correspond to a shape of the cross-section through which the punch passes.

12. The apparatus as claimed in claim 11, wherein the hole of the stripper is inclined such that a size of the hole on a side facing a punch holder configured to fix the punch is larger than that of the hole at an opposite side.

13. The apparatus as claimed in any preceding claim, further comprising a transfer part between the die tool and the punch and configured such that the slug is on a horizontal axis of the die tool and the punch, and the impact can manufactured by the punch is withdrawn, and optionally
wherein the transfer part comprises radial blades to rotate so as to transfer the slug and the impact can, and optionally,
when claim 13 is dependent on claim 9 or any claim dependent on claim 9, an area of a lower portion of the punch, which passes through the stripper, at a position of a bottom dead center has a thickness corresponding to a gap between the blades so as not to interfere with the blades.

14. The apparatus as claimed in any preceding claim, further comprising:
a punch holder configured to fix the punch;
a slide connected between the connecting rod and the punch holder to horizontally transmit power from the connecting rod; and
a slide guide configured to support horizontal movement of the slide, and optionally
wherein the punch holder is mounted on the slide such that a slide-side load application point and a load center point of the punch are on a same horizontal extension line, and/or
the punch holder is mounted on the slide such that a slide-side load application point is vertically below a horizontal extension line of the connecting rod axis by an amount of eccentricity.

15. The apparatus as claimed in claim 14, wherein the amount of eccentricity is calculated based on a distance between the horizontal extension line of the connecting rod axis and a horizontal extension line of a load center point of the punch, based on the slide-side load application point, and optionally
the amount of eccentricity is in a range of about 5 mm to about 25 mm.
